# EUROPÄISCHE PATENTSCHRIFT

(11) **EP 2 713 423 B1**
(45) Veröffentlichungstag und Bekanntmachung des Hinweises auf die Patenterteilung: **02.05.2018**
(21) Anmeldenummer: 13180030.2
(22) Anmeldetag: 12.08.2013
(51) Int. Cl.: H01M 2/20

(54) **Batteriemodul mit Verbindungselement in Omega-Form zur elektrischen Verbindung von Batteriezellen**
Battery module having a connecting element in omega form for the electrical connection of battery cells
Module de batterie avec elément de liaison en forme d'oméga pour relier électriquement des cellules de batterie

(30) Priorität: 26.09.2012 DE 102012217368
(43) Veröffentlichungstag der Anmeldung: 02.04.2014
(73) Patentinhaber: ROBERT BOSCH GMBH, 70442 Stuttgart (DE)
(72) Erfinder: Dudziak, Sonja, 74321 Bietigheim-Bissingen (DE); Schmitz, Godehard, 74372 Sersheim (DE); Speidel, Claudia, 70439 Stuttgart (DE); Kobler, Christof, 70469 Stuttgart (DE); Ramsayer, Reiner, 71277 Rutesheim (DE); Koenig, Jens, 71706 Markgroeningen (DE)

(56) Entgegenhaltungen:
- DE-A1-102008 034 871
- DE-A1-102010 019 708
- JP-A- H10 125 301

## Beschreibung

### Stand der Technik

Batteriezellen können zu Batteriemodulen verbunden werden, um mehr Energie bereitstellen zu können. Mehrere Batteriemodule können ferner zu Batteriepacks, auch als Batteriesysteme bezeichnet, verbunden werden. Die Batteriezellen eines Batteriemoduls werden dabei in der Regel durch Zellverbinder miteinander elektrisch verbunden.
Die Herstellung der bekannten Zellverbinder z.B. aus aktuell typischen miteinander verpressten Folien bzw. Lamellen kann mit einem hohen Aufwand und damit auch mit hohen Kosten einhergehen.

### Offenbarung der Erfindung

Es kann daher ein Bedarf an einem verbesserten Verbindungselement, einem entsprechenden Batteriemodul und einem verbesserten Herstellungsverfahren für das entsprechende Batteriemodul bestehen, die insbesondere eine kostengünstigere Herstellung ermöglichen.
Dieser Bedarf kann durch den Gegenstand der vorliegenden Erfindung gemäß den unabhängigen Ansprüchen gedeckt werden. Vorteilhafte Ausführungsformen der vorliegenden Erfindung sind in den abhängigen Ansprüchen beschrieben.
Im Folgenden werden Merkmale, Einzelheiten und mögliche Vorteile einer Vorrichtung gemäß Ausführungsformen der Erfindung im Detail diskutiert.

Gemäß einem ersten Aspekt der Erfindung wird ein vollständig planares Verbindungselement zum elektrischen Verbinden von Batteriezellen eines Batteriemoduls vorgestellt. Das Verbindungselement weist einen ersten Fuss, einen zweiten Fuss und ein erstes Bogenelement mit einer ersten Krümmung auf. Der erste Fuss ist mittels des ersten Bogenelements mit dem zweiten Fuss verbunden. Das Verbindungselement weist somit eine Flexibilität auf.

Anders ausgedrückt basiert die Idee der vorliegenden Erfindung darauf, das Verbindungselement durch eine bestimmte geometrische Formgebung und Materialienwahl derart auszuführen, dass dieser ausreichend flexibel ist, um Kräfte, die auf Batteriezellen innerhalb des Batteriemoduls wirken aufzunehmen.

Im Gegensatz zu bisherigen Zellverbindern, die eine aufwändige und kostspielige Herstellung erfordern, kann das Verbindungselement gemäß der Erfindung dank seiner einfachen Ausgestaltung ausgestanzt werden. Hierdurch können Herstellungskosten eingespart werden. Ferner können dank der flexiblen Ausgestaltung des Verbindungselements die innerhalb des Batteriemoduls auf die Batteriezellen wirkenden Kräfte abgefedert bzw. durch das Verbindungselement aufgenommen werden, ohne dass die Verbindungsstellen zwischen den Batteriezellen und dem Verbindungselement beschädigt werden.

Ein weiterer Vorteil der erfindungsgemäßen Ausgestaltung des Verbindungselements kann darin gesehen werden, dass Fertigungstoleranzen der einzelnen Batteriezellen durch das flexible Verbindungselement ausgeglichen werden können.

Das Verbindungselement, auch als Zellverbinder bezeichnet, kann für Batteriemodule verwendet werden, die beispielsweise in Hybrid- oder in Elektrofahrzeugen eingesetzt werden. Ferner können Batteriemodule mit dem erfindungsgemäßen Verbindungselement stationär beispielsweise an Gebäuden, zum Beispiel in Zusammenhang mit Solarzellen, verwendet werden.

Das Verbindungselement weist einen ersten Fuss und einen zweiten Fuss auf. Die Füsse des Verbindungselements sind dabei ausgeführt, mit unterschiedlichen Batteriezellen, insbesondere mit den Kontaktstellen unterschiedlicher Batteriezellen elektrisch leitend verbunden zu werden. Dabei können der erste Fuss und der zweite Fuss im unbelasteten Zustand des Verbindungselements in einer Ebene angeordnet sein. Der zweite Fuss kann einer unterbrochenen Verlängerung des ersten Fusses entsprechen. Sowohl der erste Fuss als auch der zweite Fuss können dabei ebene, planare Bereiche des Verbindungselements darstellen.

Der erste Fuss ist mittels des ersten Bogenelements mit dem zweiten Fuss verbunden. Dabei ist das Verbindungselement einstückig ausgeführt. Das heißt, das Verbindungselement wird in der gewünschten vorgegebenen geometrischen Form zum Beispiel aus einem Vollmaterial-Blech gestanzt. Das erste Bogenelement kann im Querschnitt betrachtet als gekrümmte Linie ausgeführt sein, die zwischen dem ersten Fuss und dem zweiten Fuss verläuft. Das erste Bogenelement weist dabei eine erste Krümmung auf. Die erste Krümmung kann zum Beispiel der Krümmung eines Kreises mit einem vorgegebenen Radius entsprechen. Dabei kann das erste Bogenelement einem Kreissegment, zum Beispiel einem Halbkreis oder einem 3/4 Kreis, entsprechen.

Wird das Verbindungselement belastet, das heißt mit Kraft beaufschlagt, so kann sich das Bogenelement verformen und dadurch die Kraft aufnehmen bzw. abfedern. In diesem Fall können der erste Fuss und der zweite Fuss in unterschiedlichen, zum Beispiel zu einander parallelen Ebenen, angeordnet sein. Dies wird durch die flexible Ausgestaltung des Verbindungselements mit dem ersten Bogenelement ermöglicht. Dabei können hierdurch Fertigungstoleranzen von Batteriezellen ausgeglichen werden. Ist zum Beispiel eine erste Batteriezelle bzw. eine erste Kontaktstelle der ersten Batteriezelle geringfügig kürzer als eine zweite Batteriezelle bzw. als eine zweite Kontaktstelle der zweiten Batteriezelle, so können diese dank des flexiblen Verbindungselements dennoch problemlos elektrisch miteinander verbunden werden.

Die flexible Ausgestaltung des Verbindungselements wird einerseits durch die spezielle geometrische Form und andererseits durch die Materialwahl und die Materialdicke ermöglicht. Flexibel kann dabei auch elastisch bedeuten. Das heißt das Verbindungselement ist ausgeführt, seine Form bei Krafteinwirkung zu verändern und bei Wegfall der einwirkenden Kraft in seine Ursprungsform zurückzukehren. Das Verbindungselement kann insbesondere als linear-elastische Feder ausgeführt sein.

Gemäß einem Ausführungsbeispiel der Erfindung ist das Verbindungselement Omega-förmig (Ω) ausgeführt ist. Dabei kann das Verbindungselement im Querschnitt betrachtet dem griechischen Großbuchstaben Omega Ω entsprechen. Durch eine derartige geometrische Ausgestaltung kann eine möglichst hohe Flexibilität des Verbindungselements erreicht werden.

Gemäß einem weiteren Ausführungsbeispiel der Erfindung weist das Verbindungselement ein Vollmaterial auf. Dabei kann das Verbindungselement aus Vollmaterial bestehen. Das heißt, das Verbindungselement weist keine Hohlräume oder Ausnehmungen auf. Insbesondere weist das aus Vollmaterial gebildete Verbindungselement keine Bohrungen, Lamellen oder Durchführungen auf. Ferner kann das Verbindungselement ein Schichtmaterial aufweisen bzw. daraus bestehen. Das heißt, das Verbindungselement kann mehrere Schichten des gleichen oder unterschiedlicher Materialen aufweisen.

Durch die Ausgestaltung des Verbindungselements mit einem Vollmaterial können Herstellungskosten eingespart werden. Hierzu kann das Verbindungselement beispielsweise aus einem Blech einstückig gestanzt werden. Dieser Prozess kann automatisiert werden, wodurch ferner ein Arbeitsaufwand reduziert werden kann.

Gemäß einem weiteren Ausführungsbeispiel der Erfindung weist das Verbindungselement ferner ein zweites Bogenelement mit einer zweiten Krümmung auf. Das zweite Bogenelement ist dabei zwischen dem ersten Fuss und dem zweiten Fuss des Verbindungselements vorgesehen.

Das zweite Bogenelement kann dabei zum Beispiel zwischen dem ersten Bogenelement und dem zweiten Fuss in das Verbindungselement integriert sein. Anders ausgedrückt kann das Verbindungselement im Querschnitt einer Aneinanderreihung von zwei griechischen Großbuchstaben Omega ΩΩ entsprechen. Die elektrischen Anschlusspunkte befinden sich dabei jeweils in den äußeren Füssen der Omega-Kette. Ferner können beliebig viele weitere Bogenelemente in diese Kette integriert werden. Beispielsweise ist ein drittes Bogenelement zwischen dem zweiten Bogenelement und dem zweiten Fuss in das Verbindungselement integriert. Dabei könne alle Bogenelemente und insbesondere das erste Bogenelement und das zweite Bogenelement die gleiche Krümmung aufweisen. Alternativ können die nebeneinander angeordneten Bogenelemente unterschiedliche Krümmungen aufweisen. Zwischen den einzelnen Bogenelementen können ferner ebene Bereiche vorgesehen sein, die zum Beispiel in der Ebene der Füsse des Verbindungselements liegen.

Gemäß einem weiteren Ausführungsbeispiel der Erfindung ist das zweite Bogenelement in das erste Bogenelement integriert. Dabei unterscheidet sich die erste Krümmung von der zweiten Krümmung. Die Integration des zweiten Bogenelements in das erste Bogenelement kann dabei bedeuten, dass das zweite Bogenelement zum Beispiel auf das erste Bogenelement aufgesetzt ist. Das heißt, das erste Bogenelement wird durch das zweite Bogenelement unterbrochen, indem in einem bestimmten Abschnitt des ersten Bogenelements eine andere Krümmung gegebenenfalls mit einem anderen Vorzeichen vorliegt.

Insbesondere kann die erste Krümmung des ersten Bogenelements zum Beispiel ein positives Vorzeichen und die zweite Krümmung des zweiten Bogenelements ein negatives Vorzeichen aufweisen. Dabei kann das Verbindungselement im Querschnitt zwei ineinander gesetzten und um 180° gedrehten großgeschriebenen griechischen Buchstaben Omega entsprechen.

Gemäß einem weiteren Ausführungsbeispiel der Erfindung weist das Verbindungselement ein Material oder eine Kombination von Materialien aus der folgenden Gruppe von Materialien auf: Aluminium (Al), Kupfer (Cu), Silber (Ag) und Gold (Au). Insbesondere kann das Verbindungselement Legierungen mit den genannten Materialien aufweisen.

Diese Materialien bzw. Legierungen können eine optimale elektrische Leitfähigkeit aufweisen und können ferner bei entsprechender Dimensionierung und Dicke des Materials die gewünschte Flexibilität gewährleisten.

Gemäß einem zweiten Aspekt der Erfindung wird ein Batteriemodul vorgestellt. Das Batteriemodul weist eine erste Batteriezelle, eine zweite Batteriezelle und ein oben beschriebenes Verbindungselement auf. Das Verbindungselement verbindet die erste Batteriezelle elektrisch mit der zweiten Batteriezelle.
Ferner ist das Verbindungselement dabei derart flexibel ausgeführt, geometrisch geformt und mit den Batteriezellen verbunden, dass es die innerhalb des Batteriemoduls auf die erste Batteriezelle und auf die zweite Batteriezelle wirkenden Kräfte aufnimmt. Dabei ist das Verbindungselement ferner derart geformt und an die Batteriezellen angebunden, dass trotz der auf das Verbindungselement bzw. auf die Batteriezellen einwirkenden Kräfte die elektrische Verbindung nicht beschädigt wird.

Das Batteriemodul weist dabei mindestens eine erste und eine zweite Batteriezelle auf. Insbesondere können mehrere Batteriezellen im Batteriemodul vorgesehen sein. Beispielsweise weist ein Batteriemodul zwischen 5 und 13 Batteriezellen auf.

Die Batteriezellen können beispielsweise als Lithiumionenbatterien ausgeführt sein. Ferner können die Batteriezellen als Bleiakkus-, als Nickelwasserstoff- oder Nickeleisenakkus, als Lithiummangan-, Lithiumtitan- oder Lithiumschwefelakkus ausgeführt sein.

Die Batteriezellen eines Batteriemoduls können ferner durch ein Verspannelement gegeneinander gepresst sein. Hierdurch kann die Lebensdauer der Batteriezellen positiv beeinflusst werden.

Die einzelnen Batteriezellen sind durch ein oder durch mehrere Verbindungselemente elektrisch untereinander verbunden. Ein Verbindungselement kann dabei zwei Batteriezellen elektrisch miteinander verbinden. Ferner kann ein einzelnes Verbindungselement alle Batteriezellen des Batteriemoduls elektrisch miteinander verbinden. Alternativ können mehrere Verbindungselemente im Batteriemodul vorgesehen sein. Das Verbindungselement kann ferner mit einem Ausgang des Batteriemoduls verbunden sein und auf diese Weise eine Energiequelle für Verbraucher, wie z.B. für einen Elektromotor bereitstellen.

Gemäß einem weiteren Ausführungsbeispiel der Erfindung weist die erste Batteriezelle eine erste Kontaktstelle und eine zweite Kontaktstelle auf. Die zweite Batteriezelle weist ebenfalls eine erste Kontaktstelle und eine zweite Kontaktstelle auf. Der erste Fuss des Verbindungselements ist mit der ersten Kontaktstelle der ersten Batteriezelle elektrisch verbunden. Der zweite Fuss ist mit der zweiten Kontaktstelle der zweiten Batteriezelle elektrisch verbunden.

Die erste Kontaktstelle kann auch als erste Kontaktfläche und die zweite Kontaktstelle als zweite Kontaktfläche bezeichnet werden. Dabei können die erste Kontaktfläche und die zweite Kontaktfläche den Polen der Batteriezelle, insbesondere jeweils dem Pluspol und dem Minuspol entsprechen.

Gemäß einem weiteren Ausführungsbeispiel der Erfindung weist das Batteriemodul ferner eine Schraubverbindung oder eine Schweißverbindung zwischen dem Verbindungselement und der ersten Batteriezelle auf. Ferner kann das Batteriemodul eine Schraubverbindung oder eine Schweißverbindung zwischen dem Verbindungselement und der zweiten Batteriezelle aufweisen.

Insbesondere kann die erste Batteriezelle mit dem ersten Fuss verschweißt sein. Hierbei kann zum Beispiel eine Überlappschweißung zwischen dem ersten Fuss und der ersten Kontaktstelle vorgesehen sein. Die Schweißnaht kann dabei zum Beispiel durch unterschiedliche Schweißverfahren wie zum Beispiel Laserschweißen hergestellt werden. Ferner kann die Schweißnaht durch Plasmaschweißen, insbesondere durch Mikroplasmaschweißen, durch elektromagnetisches Pulsschweißen oder durch Ultraschallschweißen hergestellt werden.

Alternativ ist die erste Batteriezelle mit dem ersten Fuss verschraubt sein. Hierzu kann im ersten Fuss eine Ausnehmung bzw. Bohrung vorgesehen sein. In diese Ausnehmung kann ein an der ersten Kontaktstelle der ersten Batteriezelle vorgesehener Pin eingeführt sein. Der Pin kann dabei ein Gewinde aufweisen, welches mit einer Schraube verschraubt werden kann.

Der zweite Fuss des Verbindungselements kann auf die gleiche Weise wie der erste Fuss mit der zweiten Kontaktstelle der zweiten Batteriezelle verbunden sein. Alternativ kann der zweite Fuss auf eine andere Art als der erste Fuss den elektrischen Kontakt zur zweiten Batteriezelle herstellen.

Gemäß einem dritten Aspekt der Erfindung wird ein Verfahren zur Herstellung eines oben beschriebenen Verbindungselements vorgestellt. Das Verfahren weist die folgenden Schritte auf: Bereitstellen einer Stanzform mit einem Stanzprofil mit einem ersten Fuss, der mittels eines ersten Bogenelements mit einem zweiten Fuss verbunden ist; Ausstanzen eines Verbindungselements aus einem Blech mittels der Stanzform.

Gemäß einem vierten Aspekt der Erfindung wird ein Verfahren zur Herstellung eines oben beschriebenen Batteriemoduls vorgestellt. Das Verfahren weist die folgenden Schritte auf: Bereitstellen einer ersten Batteriezelle; Bereitstellen einer zweiten Batteriezelle; elektrisches Verbinden der ersten Batteriezelle mit der zweiten Batteriezelle durch ein Verbindungselement. Dabei ist das Verbindungselement derart flexibel ausgeführt, dass es die innerhalb des Batteriemoduls auf die erste Batteriezelle und auf die zweite Batteriezelle wirkenden Kräfte aufnimmt.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.
Fig. 1 zeigt einen Querschnitt durch ein Verbindungselement gemäß einem ersten Ausführungsbeispiel der Erfindung
Fig. 2 zeigt einen Querschnitt durch ein Verbindungselement gemäß einem zweiten Ausführungsbeispiel der Erfindung
Fig. 3 zeigt einen Querschnitt durch ein Verbindungselement gemäß einem dritten Ausführungsbeispiel der Erfindung
Fig. 4 zeigt eine perspektivische Ansicht eines Batteriemoduls gemäß einem Ausführungsbeispiel der Erfindung

Alle Figuren sind lediglich schematische Darstellungen erfindungsgemäßer Vorrichtungen bzw. ihrer Bestandteile gemäß Ausführungsbeispielen der Erfindung. Insbesondere Abstände und Größenrelationen sind in den Figuren nicht maßstabsgetreu wiedergegeben. In den verschiedenen Figuren sind sich entsprechende Elemente mit den gleichen Referenznummern versehen.

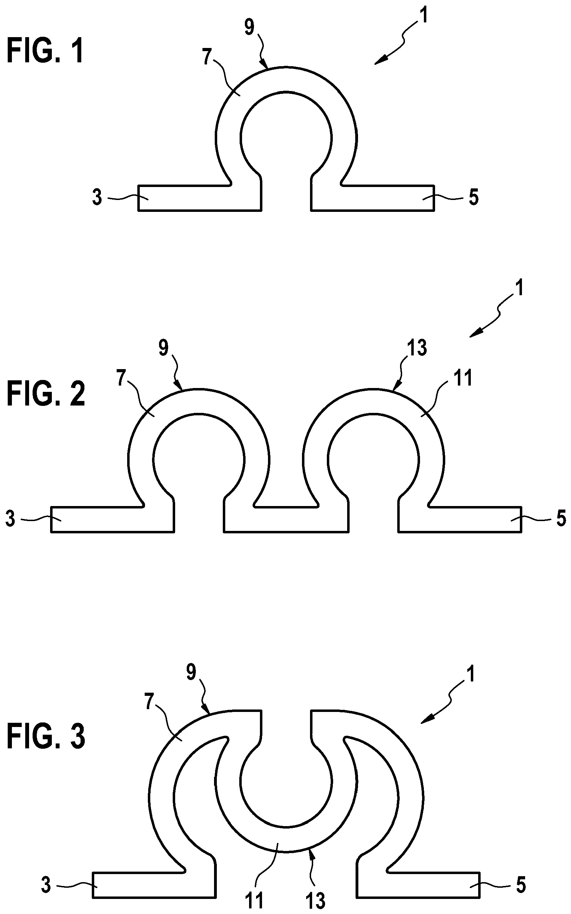

In Fig. 1 ist einen Querschnitt durch ein Verbindungselement 1 dargestellt. Das Verbindungselement 1 ist dabei Ω-förmig ausgeführt. Das heißt, in Fig. 1 entspricht die Form des Verbindungselements im Querschnitt dem griechischen Großbuchstaben Omega (Ω). Insbesondere weist das Verbindungselement 1 einen ersten Fuss 3, einen zweiten Fuss 5 und ein erstes Bogenelement 7 mit einer ersten Krümmung 9 auf. Der erste Fuss 3 ist mittels des ersten Bogenelements 7 mit dem zweiten Fuss 5 verbunden.

Das Verbindungelement 1 ist einstückig ausgeführt und kann zum Beispiel aus einem Aluminium-, einem Kupfer-, einem Silber- oder einem Gold-Blech ausgestanzt sein. Dank der einstückigen Ausführung des Verbindungselements 1 kann ein Herstellungsprozess des Verbindungselements 1 kostengünstig gestaltet werden. Ferner kann das Ausstanzen automatisiert und dadurch der Arbeitsaufwand bei der Herstellung des Verbindungselements 1 reduziert werden.

Durch die spezielle geometrische Form und auch durch die Materialienwahl ist das Verbindungselement 1 flexibel ausgeführt. Das heißt, das Verbindungselement 1 kann Kräfte aufnehmen und abfedern, die auf die Batteriezellen wirken, die durch das Verbindungselement 1 elektrisch verbunden sind.

In Fig. 2 ist eine alternative Ausführungsform des Verbindungselements 1 im Querschnitt dargestellt. Dabei weist das Verbindungselement 1 zusätzlich zu den in Zusammenhang mit Fig. 1 beschriebenen Elementen ferner ein zweites Bogenelement 11 mit einer zweiten Krümmung 13 auf. Das zweite Bogenelement 11 ist dabei zwischen dem ersten Bogenelement 7 und dem zweiten Fuss 5 angeordnet. Dabei ist das Verbindungselement 1 ΩΩ-förmig ausgeführt. Anders ausgedrückt entspricht das Verbindungselement 1 im Querschnitt zwei aneinandergereihten griechischen Großbuchstaben Omega Ω. Dabei sind die inneren Füsse der beiden Omegas miteinander verbunden.

Die erste Krümmung 9 des ersten Bogenelements 7 entspricht im Ausführungsbeispiel in Fig. 2 der zweiten Krümmung 13 des zweiten Bogenelements 11. Allerdings kann sich die erste Krümmung 9 von der zweiten Krümmung 13 unterscheiden.

In Fig. 3 ist ein weiteres alternatives Ausführungsbeispiel des Verbindungselements 1 dargestellt. Dabei ist das zweite Bogenelement 11 in das erste Bogenelement 7 integriert. Ferner unterscheidet sich die erste Krümmung 9 des ersten Bogenelements 7 sowohl im Betrag als auch im Vorzeichen von der zweiten Krümmung 13 des zweiten Bogenelements 11. Anders ausgedrückt entspricht das Verbindungselement 1 im Querschnitt zwei ineinander liegenden um 180° gegeneinender gedrehten griechischen Großbuchstaben Omega Ω.

Dabei wird durch die Ausgestaltung des Verbindungselements 1 mit einem oder mit mehreren Bogenelementen 7, 11 eine möglichst optimale Flexibilität des Verbindungselements 1 erreicht. Das Verbindungselement 1 kann dabei ausgeführt sein nach Verformung in die ursprüngliche Form zurückzukehren.

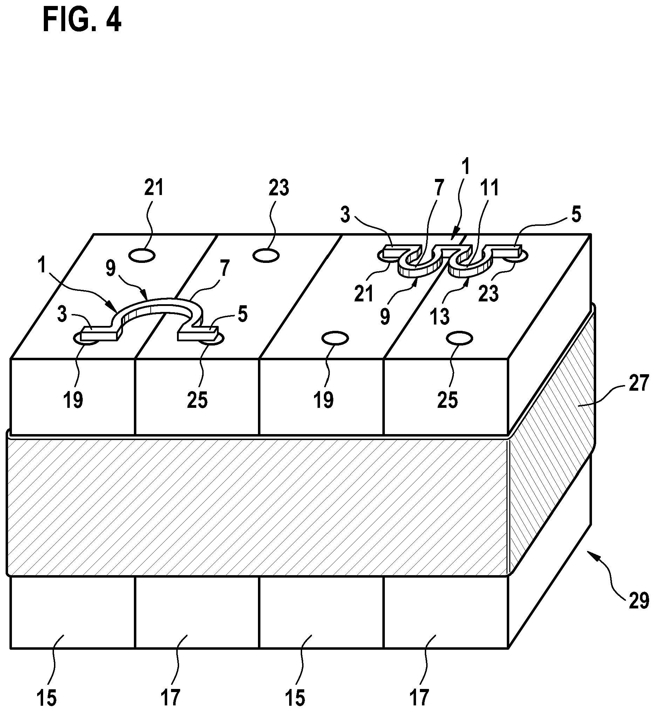

In Fig. 4 ist ein Batteriemodul 29 dargestellt. Das Batteriemodul 29 weist eine erste Batteriezelle 15, eine zweite Batteriezelle 17 und ein oder mehrere Verbindungselemente 1 auf. Im Ausführungsbeispiel in Fig. 4 sind zwei Verbindungselemente 1 vorgesehen. Ferner sind im Ausführungsbeispiel in Fig. 4 insgesamt vier Batteriezellen, insbesondere zwei erste Batteriezellen 15 und zwei zweite Batteriezellen 17 dargestellt.

Dabei können verschiedene Batteriezellen 15, 17 eines Batteriemoduls 29 mittels gleich ausgeführter oder mittels unterschiedlich ausgeführter Verbindungselemente 1 verbunden sein. Im Ausführungsbeispiel in Fig. 4 ist ein Paar von Batteriezellen 15, 17 durch ein Ωförmiges Verbindungselement 1 elektrisch miteinander verbunden. Ferner ist ein weiteres Paar von Batteriezellen 15, 17 durch ein ΩΩ-förmiges Verbindungselement 1 elektrisch miteinander verbunden.

Die erste Batteriezelle 15 weist eine erste Kontaktstelle 19 und eine zweite Kontaktstelle 21 auf. Ferner weist die zweite Batteriezelle 17 eine erste Kontaktstelle 23 und eine zweite Kontaktstelle 25 auf. Ein erster Fuss 3 des Ω-förmigen Verbindungselements 1 ist dabei mit der ersten Kontaktstelle 19 der ersten Batteriezelle 15 verbunden. Ferner ist der zweite Fuss 5 des Verbindungselements 1 mit der zweiten Kontaktstelle 25 der ersten Batteriezelle 15 verbunden. Die Verbindung kann dabei eine Schraubverbindung oder eine stoffschlüssige Verbindung zum Beispiel durch Laserschweißen sein.

Ferner kann der erste Fuss 3 des weiteren ΩΩ-förmigen Verbindungselements 1, welches in Fig. 4 dargestellt ist mit einer zweiten Kontaktstelle 21 der ersten Batteriezelle 15 verbunden sein. Des Weiteren kann der zweite Fuss 5 dieses Verbindungselements 1 mit einer ersten Kontaktstelle 23 der zweiten Batteriezelle 17 verbunden sein.

Die Batteriezellen 15, 17 des Batteriemoduls 29 können dabei mit Hilfe eines Verspannelements 27 gegeneinander gepresst sein, um die Lebensdauer der Batteriezellen 15, 17 zu erhöhen.

Abschließend wird angemerkt, dass Ausdrücke wie "aufweisend" oder ähnliche nicht ausschließen sollen, dass weitere Elemente oder Schritte vorgesehen sein können. Des Weiteren sei darauf hingewiesen, dass "eine" oder "ein" keine Vielzahl ausschließen. Außerdem können in Verbindung mit den verschiedenen Ausführungsformen beschriebene Merkmale beliebig miteinander kombiniert werden. Es wird ferner angemerkt, dass die Bezugszeichen in den Ansprüchen nicht als den Umfang der Ansprüche beschränkend ausgelegt werden sollen.

## Patentansprüche

1. Batteriemodul (29), das Batteriemodul (29) aufweisend
eine erste Batteriezelle (15) mit einer ersten ersten Kontaktstelle (19) und einer ersten zweiten Kontaktstelle (21);
eine zweite Batteriezelle (17) mit einer zweiten ersten Kontaktstelle (23) und einer zweiten zweiten Kontaktstelle (25);
ein Verbindungselement (1) aufweisend
einen ersten Fuss (3);
einen zweiten Fuss (5);
ein erstes Bogenelement (7) mit einer ersten Krümmung (9);
wobei der erste Fuss (3) mittels des ersten Bogenelements (7) mit dem zweiten Fuss (5) verbunden ist; und
wobei das Verbindungselement (1) flexibel ausgeführt ist und
das Verbindungselement (1) die erste Batteriezelle (15) elektrisch mit der zweiten Batteriezelle (17) verbindet; wobei
das Verbindungselement (1) derart flexibel ausgeführt ist, dass es die innerhalb des Batteriemoduls (29) auf die erste Batteriezelle (15) und auf die zweite Batteriezelle (17) wirkende Kräfte aufnimmt,
**dadurch gekennzeichnet, dass**
das Verbindungselement (1) vollständig planar ausgebildet ist und parallel verlaufend zu einer durch die Kontaktstellen (19, 21, 23, 25) der ersten Batteriezelle (15) und der zweiten Batteriezelle (17) ausgebildeten Ebene angeordnet ist.

2. Batteriemodul nach dem vorhergehenden Anspruch 1,
**dadurch gekennzeichnet, dass**
das Verbindungselement (1) Omega-förmig (Ω) ausgeführt ist.

3. Batteriemodul nach einem der vorgehenden Ansprüche 1 bis 2,
**dadurch gekennzeichnet, dass**
das Verbindungselement (1) ein Vollmaterial aufweist.

4. Batteriemodul nach einem der vorhergehenden Ansprüche 1 bis 3,
**dadurch gekennzeichnet, dass**
das Verbindungselement ferner ein zweites Bogenelement (11) mit einer zweiten Krümmung (13) aufweist;
wobei das zweite Bogenelement (11) zwischen dem ersten Fuss (3) und dem zweiten Fuss (5) des Verbindungselements (1) vorgesehen ist.

5. Batteriemodul nach einem der vorhergehenden Ansprüche 1 bis 4,
**dadurch gekennzeichnet, dass**
das zweite Bogenelement (11) in das erste Bogenelement (7) integriert ist;
wobei sich die erste Krümmung (9) von der zweiten Krümmung (13) unterscheidet.

6. Batteriemodul nach einem der vorhergehenden Ansprüche 1 bis 5,
**dadurch gekennzeichnet, dass**
das Verbindungselement (1) ein Material oder eine Kombination von Materialien aus der folgenden Gruppe von Materialien aufweist: Aluminium, Kupfer, Silber und Gold.

7. Batteriemodul nach einem der vorhergehenden Ansprüche 1 bis 6,
**dadurch gekennzeichnet, dass**
der erste Fuss (3) mit der ersten ersten Kontaktstelle (19) der ersten Batteriezelle (15) elektrisch verbunden ist; und
dass der zweite Fuss (5) mit der zweiten zweiten Kontaktstelle (25) der zweiten Batteriezelle (17) elektrisch verbunden ist.

8. Batteriemodul nach einem der vorhergehenden Ansprüche 1 bis 7,
**dadurch gekennzeichnet, dass**
das Batteriemodul ferner eine Schraubverbindung oder eine Schweißverbindung zwischen dem Verbindungselement (1) und der ersten Batteriezelle (15) aufweist.

9. Verfahren zur Herstellung eines Verbindungselements (1) eines Batteriemoduls (29) gemäß einem der Ansprüche 1 bis 8, das Verfahren aufweisend die folgenden Schritte Bereitstellen einer Stanzform mit einem Stanzprofil mit einem ersten Fuss (3), der mittels eines ersten Bogenelements (7) mit einem zweiten Fuss (5) verbunden ist;
Ausstanzen eines Verbindungselements (1) aus einem Blech mittels der Stanzform.

10. Verfahren zur Herstellung eines Batteriemoduls (29) gemäß einem der Ansprüche 7 bis 9, das Verfahren aufweisend die folgenden Schritte
Bereitstellen einer ersten Batteriezelle (15) mit einer ersten ersten Kontaktstelle (19) und einer ersten zweiten Kontaktstelle (21);
Bereitstellen einer zweiten Batteriezelle (17) mit einer zweiten ersten Kontaktstelle (23) und einer zweiten zweiten Kontaktstelle (25);
Bereitstellen eines Verbindungselement (1) mit
einem ersten Fuss (3);
einem zweiten Fuss (5);
einem ersten Bogenelement (7) mit einer ersten Krümmung (9);
wobei der erste Fuss (3) mittels des ersten Bogenelements (7) mit dem zweiten Fuss (5) verbunden wird; und
wobei das Verbindungselement (1) flexibel ausgeführt wird und
elektrisches Verbinden der ersten Batteriezelle (15) mit der zweiten Batteriezelle (17) durch ein Verbindungselement (1);
wobei
das Verbindungselement (1) dabei weiterhin derart flexibel ausgeführt wird, dass es die innerhalb des Batteriemoduls (29) auf die erste Batteriezelle (15) und auf die zweite Batteriezelle (17) wirkende Kräfte aufnimmt,
**dadurch gekennzeichnet, dass**
das Verbindungselement (1) vollständig planar ausgebildet wird und parallel verlaufend zu einer durch die Kontaktstellen (19, 21, 23, 25) der ersten Batteriezelle (15) und der zweiten Batteriezelle (17) ausgebildeten Ebene angeordnet wird.

## Claims

1. Battery module (29), the battery module (29) comprising
a first battery cell (15) having a first first contact point (19) and a first second contact point (21);
a second battery cell (17) having a second first contact point (23) and a second second contact point (25) ;
a connecting element (1) comprising
a first foot (3);
a second foot (5);
a first bow element (7) having a first curvature (9); wherein the first foot (3) is connected to the second foot (5) by means of the first bow element (7); and wherein the connecting element (1) is configured in a flexible manner and
the connecting element (1) electrically connects the first battery cell (15) to the second battery cell (17); wherein
the connecting element (1) is configured in a flexible manner in such a way that it absorbs the forces which act on the first battery cell (15) and on the second battery cell (17) within the battery module (29),
**characterized in that**
the connecting element (1) is of completely planar design and is arranged so as to run parallel to a plane which is formed by the contact points (19, 21, 23, 25) of the first battery cell (15) and of the second battery cell (17).

2. Battery module according to preceding Claim 1,
**characterized in that**
the connecting element (1) is configured in the shape of an omega (Q).

3. Battery module according to either of the preceding Claims 1 and 2,
**characterized in that**
the connecting element (1) is composed of a solid material.

4. Battery module according to one of the preceding Claims 1 to 3,
**characterized in that**
the connecting element further has a second bow element (11) having a second curvature (13);
wherein the second bow element (11) is provided between the first foot (3) and the second foot (5) of the connecting element (1).

5. Battery module according to one of the preceding Claims 1 to 4,
**characterized in that**
the second bow element (11) is integrated into the first bow element (7);
wherein the first curvature (9) differs from the second curvature (13).

6. Battery module according to one of the preceding Claims 1 to 5,
**characterized in that**
the connecting element (1) is composed of a material or a combination of materials from the following group of materials: aluminium, copper, silver and gold.

7. Battery module according to one of the preceding Claims 1 to 6,
**characterized in that**
the first foot (3) is electrically connected to the first first contact point (19) of the first battery cell (15); and
**in that** the second foot (5) is electrically connected to the second second contact point (25) of the second battery cell (17).

8. Battery module according to one of the preceding Claims 1 to 7,
**characterized in that**
the battery module further has a screw connection or a weld connection between the connecting element (1) and the first battery cell (15).

9. Method for producing a connecting element (1) of a battery module (29) according to one of Claims 1 to 8, the method comprising the following steps
providing a punching die with a punching profile having a first foot (3) which is connected to a second foot (5) by means of a first bow element (7);
punching a connecting element (1) out of a metal sheet by means of the punching die.

10. Method for producing a battery module (29) according to one of Claims 7 to 9, the method comprising the following steps
providing a first battery cell (15) having a first first contact point (19) and a first second contact point (21);
providing a second battery cell (17) having a second first contact point (23) and a second second contact point (25);
providing a connecting element (1) having a first foot (3);
a second foot (5);
a first bow element (7) having a first curvature (9);
wherein the first foot (3) is connected to the second foot (5) by means of the first bow element (7); and
wherein the connecting element (1) is configured in a flexible manner, and
electrically connecting the first battery cell (15) to the second battery cell (17) using a connecting element (1);
wherein
the connecting element (1) is further configured in a flexible manner here in such a way that it absorbs the forces which act on the first battery cell (15) and on the second battery cell (17) within the battery module (29),
**characterized in that**
the connecting element (1) is of completely planar design and is arranged so as to run parallel to a plane which is formed by the contact points (19, 21, 23, 25) of the first battery cell (15) and of the second battery cell (17).

## Revendications

1. Module de batterie (29), le module de batterie (29) comportant
un premier élément de batterie (15) ayant un premier premier point de contact (19) et un premier deuxième point de contact (21) ;
un deuxième élément de batterie (17) ayant un deuxième premier point de contact (23) et un deuxième deuxième point de contact (25) ;
un élément de liaison (1) comportant
un premier pied (3);
un deuxième pied (5);
un premier élément d'arc (7) ayant une première courbure (9) ;
dans lequel le premier pied (3) est relié au deuxième pied (5) au moyen du premier élément d'arc (7); et dans lequel l'élément de liaison (1) est de conception flexible et
l'élément de liaison (1) relie électriquement le premier élément de batterie (15) au deuxième élément de batterie (17);
l'élément de liaison (1) est réalisé de manière flexible afin d'absorber les forces agissant à l'intérieur du module de batterie (29) sur le premier élément de batterie (15) et sur le deuxième élément de batterie (17),
**caractérisé en ce que** l'élément de liaison (1) est réalisé de manière entièrement plane et est disposé de manière à s'étendre parallèlement à un plan formé par les points de contact (19, 21, 23, 25) du premier élément de batterie (15) et du deuxième élément de batterie (17).

2. Module de batterie selon la revendication 1 précédente,
**caractérisé en ce que** l'élément de liaison (1) est réalisé en forme d'oméga (Ω).

3. Module de batterie selon l'une des revendications 1 à 2 précédentes,
**caractérisé en ce que** l'élément de liaison (1) comprend un matériau plein.

4. Module de batterie selon l'une des revendications précédentes 1 à 3,
**caractérisé en ce que** l'élément de liaison comporte en outre un deuxième élément d'arc (11) ayant une deuxième courbure (13) ;
dans lequel le deuxième élément d'arc (11) est prévu entre le premier pied (3) et le deuxième pied (5) de l'élément de liaison (1).

5. Module de batterie selon l'une des revendications précédentes 1 à 4,
**caractérisé en ce que** le deuxième élément d'arc (11) est intégré dans le premier élément d'arc (7) ;
dans lequel la première courbure (9) diffère de la deuxième courbure (13).

6. Module de batterie selon l'une des revendications précédentes 1 à 5,
**caractérisé en ce que** l'élément de liaison (1) comprend un matériau ou une combinaison de matériaux du groupe de matériaux suivants : aluminium, cuivre, argent et or.

7. Module de batterie selon l'une des revendications précédentes 1 à 6,
**caractérisé en ce que** le premier pied (3) est relié électriquement au premier point de contact (19) du premier élément de batterie (15) ;
et **en ce que** le deuxième pied (5) est relié électriquement au deuxième deuxième point de contact (25) du deuxième élément de batterie (17).

8. Module de batterie selon l'une des revendications précédentes 1 à 7,
**caractérisé en ce que** le module de batterie comprend en outre une liaison par vissage ou une liaison par soudage entre l'élément de liaison (1) et le premier élément de batterie (15).

9. Procédé de fabrication d'un élément de liaison (1) d'un module de batterie (29) selon l'une des revendications 1 à 8, le procédé comprenant les étapes consistant à fournir une forme de découpe ayant un profil de découpe comportant un premier pied (3) relié à un deuxième pied (5) au moyen d'un premier élément d'arc (7) ;
découper un élément de liaison (1) dans une tôle au moyen de la forme de découpe.

10. Procédé de fabrication d'un module de batterie (29) selon l'une des revendications 7 à 9, le procédé comprenant les étapes consistant à
fournir un premier élément de batterie (15) ayant un premier premier point de contact (19) et un premier deuxième point de contact (21) ;
fournir un deuxième élément de batterie (17) ayant un deuxième premier point de contact (23) et un deuxième deuxième point de contact (25) ;
fournir un élément de liaison (1) comportant
un premier pied (3);
un deuxième pied (5);
un premier élément d'arc (7) ayant une première courbure (9) ;
dans lequel le premier pied (3) est relié au deuxième pied (5) au moyen du premier élément d'arc (7) ; et
dans lequel l'élément de liaison (1) est réalisé de manière flexible et
relier électriquement le premier élément de batterie (15) au deuxième élément de batterie (17) par l'intermédiaire d'un élément de liaison (1);
dans lequel
l'élément de liaison (1) est par ailleurs ainsi réalisé de manière flexible afin d'absorber les forces agissant à l'intérieur du module de batterie (29) sur le premier élément de batterie (15) et sur le deuxième élément de batterie (17),
**caractérisé en ce que** l'élément de liaison (1) est réalisé de manière entièrement plane et est disposé de manière à s'étendre parallèlement à un plan formé par les points de contact (19, 21, 23, 25) du premier élément de batterie (15) et du deuxième élément de batterie (17).
